# EUROPEAN PATENT APPLICATION

(11) **EP 4 694 398 A1**
(43) Date of publication of application: **11.02.2026**
(21) Application number: 23930563.4
(22) Date of filing: 30.03.2023
(51) Int. Cl.: H04W 56/00, H04W 16/28

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2023/013272
(87) International publication number: WO 2024/201925

(57) **Abstract**

A terminal according to one aspect of the present disclosure includes a receiving section that receives serving cell configuration information, and a control section that determines timing advance to be applied to UL transmission, based on at least one of the serving cell configuration information and whether or not spatial relation information corresponding to the UL transmission is provided or a timing advance group associated with the spatial relation information.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, radio communication systems of versions later than Rel. 17/5G), it is assumed that communication using a plurality of transmission/reception points (for example, a multi-TRP (MTRP)) is performed in a serving cell.

It is also assumed that a plurality of TRPs are configured in a certain serving cell and application of timing advance for each TRP is supported.

In this case, how to perform control of UL transmission (for example, application/configuration and the like of timing advance/timing advance group) presents a problem.

The present disclosure is made in view of such circumstances, and has one object to provide a terminal, a radio communication method, and a base station that enable appropriate control of UL transmission.

### Solution to Problem

A terminal according to one aspect of the present disclosure includes a receiving section that receives serving cell configuration information, and a control section that determines timing advance to be applied to UL transmission, based on at least one of the serving cell configuration information and whether or not spatial relation information corresponding to the UL transmission is provided or a timing advance group associated with the spatial relation information.

### Advantageous Effects of Invention

According to one aspect of the present disclosure, UL transmission can be appropriately controlled.

### Brief Description of Drawings

[FIG. 1] FIG. 1A to FIG. 1D are diagrams to show examples of multi-TRPs.
[FIG. 2] FIG. 2 is a diagram to show an example of timing advance groups (TAGs) to which cells included in cell groups belong.
[FIG. 3] FIG. 3A and FIG. 3B are diagrams to show examples of a MAC CE for a timing advance command.
[FIG. 4] FIG. 4 is a diagram to show an example of a configuration of TAGs when association of TAG IDs with candidate cells is supported.
[FIG. 5] FIG. 5A and FIG. 5B show examples of a unified/common TCI framework.
[FIG. 6] FIG. 6A and FIG. 6B show examples of DCI based TCI state indication.
[FIG. 7] FIG. 7A to FIG. 7C are diagrams to show examples of PUSCH transmission using a plurality of panels.
[FIG. 8] FIG. 8A and FIG. 8B are diagrams to show examples of PUCCH transmission using a plurality of panels.
[FIG. 9] FIG. 9 is a diagram to show an example of serving cell configuration information.
[FIG. 10] FIG. 10A and FIG. 10B are diagrams to show examples of the serving cell configuration information according to a first embodiment.
[FIG. 11] FIG. 11A and FIG. 11B are diagrams to show other examples of the serving cell configuration information according to the first embodiment.
[FIG. 12] FIG. 12A and FIG. 12B are diagrams to show examples of the serving cell configuration information according to a second embodiment.
[FIG. 13] FIG. 13 is a diagram to show an example of an association between SRS resource sets/SRS resources and TAGs according to a third embodiment.
[FIG. 14] FIG. 14 is a diagram to show an example of an association between SRS resources and a TAG indicated by an SRI according to a fourth embodiment.
[FIG. 15] FIG. 15A and FIG. 15B are diagrams to show examples of configuration information of an SRS according to a fifth embodiment.
[FIG. 16] FIG. 16 is a diagram to show an example of a schematic structure of a radio communication system according to one embodiment.
[FIG. 17] FIG. 17 is a diagram to show an example of a structure of a base station according to one embodiment.
[FIG. 18] FIG. 18 is a diagram to show an example of a structure of a user terminal according to one embodiment.
[FIG. 19] FIG. 19 is a diagram to show an example of a hardware structure of the base station and the user terminal according to one embodiment.
[FIG. 20] FIG. 20 is a diagram to show an example of a vehicle according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE, based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

Note that a channel/signal being a target of application of a TCI state may be referred to as a target channel/reference signal (RS) or simply as a target, and another signal described above may be referred to as a reference reference signal (reference RS), a source RS, or simply as a reference.

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), a reference signal for QCL detection (also referred to as a QRS), a reference signal for demodulation (DeModulation Reference Signal (DMRS)), and the like.

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (Multi-TRP)

For NR, it is studied that one or a plurality of transmission/reception points (TRPs) (multi-TRP) perform DL transmission to a UE by using one or a plurality of panels (multi-panel). It is also studied that the UE performs UL transmission to the one or plurality of TRPs.

Note that the plurality of TRPs may correspond to the same cell identifier (ID) or may correspond to different cell IDs. The cell ID may be a physical cell ID (for example, a PCI) or a virtual cell ID.

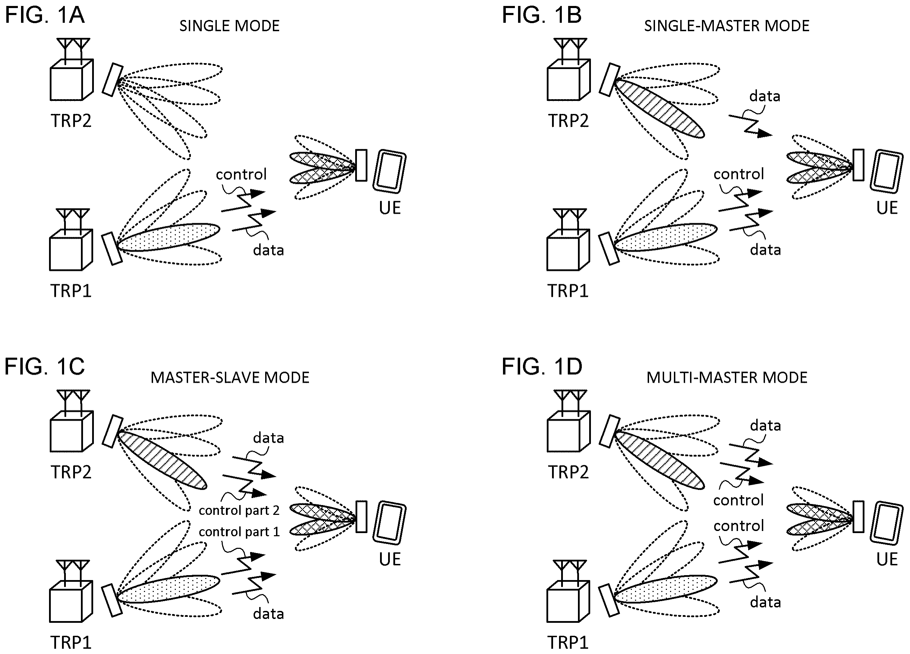

FIG. 1A to FIG. 1D are diagrams to show examples of multi-TRP scenarios. In these examples, it is assumed that each TRP can transmit four different beams, but this is not restrictive.

FIG. 1A shows an example of a case where only one TRP (TRP1 in this example) of the multi-TRP performs transmission to a UE (which may be referred to as a single mode, a single TRP, and the like). In this case, TRP1 transmits both a control signal (PDCCH) and a data signal (PDSCH) to the UE.

In the present disclosure, a single-TRP mode may mean a mode where no multi-TRP (mode) is configured.

FIG. 1B shows an example of a case where only one TRP (TRP1 in this example) of the multi-TRP transmits a control signal to a UE and where the multi-TRP transmits data signals (which may be referred to as a single-master mode). The UE receives respective PDSCHs transmitted from the multi-TRP, based on one piece of downlink control information (DCI).

FIG. 1C shows an example of a case where the respective TRPs of the multi-TRP transmit parts of a control signal to a UE and where the multi-TRP transmits data signals (which may be referred to as a master-slave mode). TRP1 may transmit part 1 of the control signal (DCI), and TRP2 may transmit part 2 of the control signal (DCI). Part 2 of the control signal may depend on part 1. The UE receives respective PDSCHs transmitted from the multi-TRP, based on these parts of the DCI.

FIG. 1D shows an example of a case where the respective TRPs of the multi-TRP transmit different control signals to a UE and where the multi-TRP transmits data signals (which may be referred to as a multi-master mode). TRP1 may transmit a first control signal (DCI), and TRP2 may transmit a second control signal (DCI). The UE receives respective PDSCHs transmitted from the multi-TRP, based on these pieces of DCI.

When a plurality of PDSCHs from multi-TRP (which may be referred to as multi-PDSCH (multiple PDSCHs)) are scheduled by using one piece of DCI as in FIG. 1B, the DCI may be referred to as single DCI (S-DCI, single PDCCH). When a plurality of PDSCHs from multi-TRP are scheduled by using a plurality of pieces of DCI as in FIG. 1D, the plurality of pieces of DCI may be referred to as multi-DCI (M-DCI, multi-PDCCH (multiple PDCCHs)).

Each TRP of the multi-TRP may transmit a different transport block (TB)/codeword (Code Word (CW))/different layer. Alternatively, each TRP of the multi-TRP may transmit the same TB/CW/layer.

As one mode of multi-TRP transmission, non-coherent joint transmission (NCJT) is studied. In NCJT, for example, TRP1 performs modulation mapping on a first codeword, performs layer mapping, and transmits a first PDSCH in layers of a first number (for example, two layers) by using first precoding. TRP2 performs modulation mapping on a second codeword, performs layer mapping, and transmits a second PDSCH in layers of a second number (for example, two layers) by using second precoding.

Note that a plurality of PDSCHs (multi-PDSCH) transmitted by NCJT may be defined to partially or entirely overlap in terms of at least one of the time and frequency domains. In other words, the first PDSCH from a first TRP and the second PDSCH from a second TRP may overlap in terms of at least one of the time and frequency resources.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

For URLLC for multi-TRP, it is studied to support PDSCH (transport block (TB) or codeword (CW)) repetition over multi-TRP. It is studied to support a scheme of repetition over multi-TRP in the frequency domain, the layer (space) domain, or the time domain (URLLC schemes, for example, schemes 1, 2a, 2b, 3, and 4). In scheme 1, multi-PDSCH from multi-TRP is space division multiplexed (SDMed). In schemes 2a and 2b, PDSCHs from multi-TRP are frequency division multiplexed (FDMed). In scheme 2a, a redundancy version (RV) is the same for the multi-TRP. In scheme 2b, an RV may be the same or may be different for the multi-TRP. In schemes 3 and 4, multi-PDSCH from multi-TRP is time division multiplexed (TDMed). In scheme 3, multi-PDSCH from multi-TRP is transmitted in one slot. In scheme 4, multi-PDSCH from multi-TRP is transmitted in different slots.

According to such multi-TRP scenarios, more flexible transmission control using a channel with high quality is possible.

NCJT using multi-TRP/panel has a possibility of using a high rank. To support ideal and non-ideal backhaul between a plurality of TRPs, both single DCI (single PDCCH, for example, FIG. 1B) and multi-DCI (multi-PDCCH, for example, FIG. 1D) may be supported. The maximum number of TRPs may be two for both single DCI and multi-DCI.

TCI extension is studied for single-PDCCH design (mainly for ideal backhaul). Each TCI codepoint in DCI may correspond to one or two TCI states. A TCI field size may be the same as that of Rel. 15.

For a PDCCH/CORESET defined in Rel. 15, one TCI state without any CORESET pool index (CORESETPoolIndex) (which may be referred to as TRP information (TRP Info)) is configured for one CORESET.

For enhancement of a PDCCH/CORESET defined in Rel. 16, a CORESET pool index is configured for each CORESET in multi-DCI based multi-TRP.

### (Timing Advance Group)

When a plurality of TRPs are used, there are some cases where the distance between the UE and each TRP is different. The plurality of TRPs may be included in the same cell (for example, a serving cell). Alternatively, among the plurality of TRPs, a certain TRP corresponds to the serving cell, while the other TRP(s) may correspond to a non-serving cell(s). In this case, it is also assumed that the distance between each TRP and the UE is different.

In existing systems, transmission timing of a UL (Uplink) channel and/or a UL signal (UL channel/signal) is adjusted by timing advance (TA). Reception timing of a UL channel/signal from a different user terminal (UE) is adjusted on the radio base station (also referred to as a TRP (Transmission and Reception Point), gNB (gNodeB), and the like)) side.

The UE may employ timing advance for each timing advance group (TAG) (multiple timing advances) configured in advance to perform timing control for UL transmission.

When the multiple timing advances are employed, timing advance groups (TAGs) classified according to transmission timing are supported. The UE may control UL transmission timing in each TAG by assuming that the same TA offset (or TA value) is used for each TAG. In other words, the TA offset may be configured independently for each TAG.

When the multiple timing advances are employed, the UE independently adjusting transmission timing for the cells belonging to each TAG enables matching at a radio base station in terms of timing of uplink signal reception from the UE even when a plurality of cells are used.

A TAG (for example, serving cells belonging to the same TAG) may be configured by a higher layer parameter. The same timing advance value may be applied to the serving cells belonging to the same TAG (for example, serving cells configured with UL). A timing advance group including an SpCell of a MAC entity may be referred to as a primary timing advance group (PTAG), and a TAG other than the PTAG may be referred to as a secondary timing advance group (STAG). The maximum number of TAGs may be X (for example, X = 4) for each cell group (MCG/SCG).

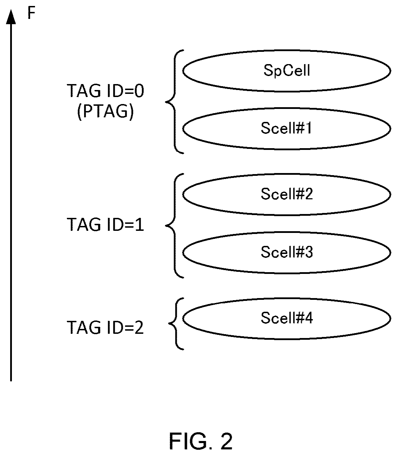

In existing systems (for example, Rel-16 NR), configuration of up to four TAGs is supported for each cell group (for example, MCG/SCG) (see FIG. 2). FIG. 2 shows a case where three TAGs are configured for a cell group including an SpCell and SCells #1 to #4. Here, shown is a case where the SpCell and SCell #1 belong to a first TAG (PTAG or TAG #0), SCell #2 and SCell #3 belong to a second TAG (TAG #1), and SCell #4 belongs to a third TAG (TAG #2).

The UE may be notified of a timing advance command (TA command) by using a MAC control element (for example, a MAC CE). The TA command is a command that indicates an uplink channel transmission timing value and is included in the MAC control element. The TA command (TAC) is signaled from a radio base station to the UE on a MAC layer. The UE controls a certain timer (for example, a TA timer), based on reception of the TA command.

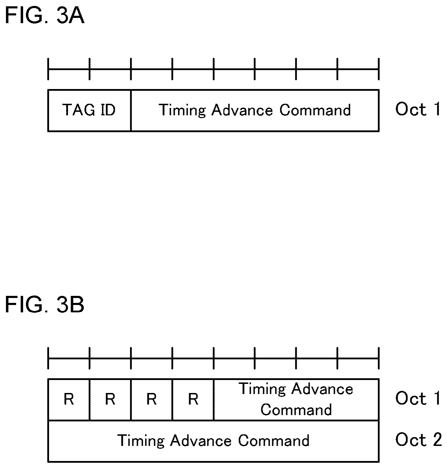

A MAC CE for a timing advance command may have a structure including a field for a timing advance group index (for example, a TAG ID) and a field for a timing advance command (see FIG. 3A). The MAC CE may include one octet (= 8 bits).

A TAG ID field may include 2 bits, for example. The TAG ID field may be used for indication of the TAG ID of an addressed TAG. A timing advance command field (TAC field) may include 6 bits, for example. The TAC field may indicate an index value T_{A} (0, 1, 2, ..., 63) used for control of a timing adjustment amount/value (relative amount/relative value) that the MAC entity needs to apply. The MAC CE for the timing advance command shown in FIG. 3A may be referred to as a TAC MAC CE.

FIG. 3B is a diagram to show another example of a MAC CE for a timing advance command. The MAC CE shown in FIG. 3B may be referred to as an absolute TAC MAC CE. The MAC CE may include two octets (= 16 bits). Specifically, the MAC CE may include a field for reserved bits (R-bit field) and a field for a timing advance command (TAC field). The R-bit field (R = 0) may include 4 bits, for example. The TAC field may include 12 bits, for example, across two octets. The TAC field of FIG. 3B may indicate an index value used for control of an actual TA amount/value (absolute amount/absolute value) that the MAC entity needs to apply, similarly to FIG. 3A. The absolute TAC MAC CE need not include the TAG ID field shown in FIG. 3A.

The MAC CE shown in FIG. 3A may be used after initial access is established. In contrast, the MAC CE shown in FIG. 3B may be used only at the time of initial access and be included in a RAR or the like. The fields included in the above-described MAC CE for the timing advance command may each be referred to as a field related to TA. Among the fields, the TAC field shown in FIG. 3A may be referred to as a TA adjustment field/a field for indicating TA adjustment/a field related to TA adjustment, and the TAC field shown in FIG. 3B may be referred to as an absolute TAC field/field for indicating an absolute TAC.

A parameter corresponding to each TAG ID may be configured by a higher layer parameter. For example, a parameter such as a time alignment timer (for example, timeAlignmentTimer) corresponding to each TAG ID may be configured. Alternatively, a TAG ID may be configured for each serving cell by a higher layer parameter (for example, tag-ID included in ServingCellConfig). Note that each TAG ID/parameter may be updated by a MAC CE after being configured by a higher layer parameter.

The time alignment timer may be maintained for UL time alignment. In Rel. 17, a time alignment timer may be configured/associated for each TAG. When the UE has received a MAC CE for timing advance command (for example, a TAC MAC CE), the UE starts or restarts a time alignment timer related to each indicated timing advance group (for example, TAG).

When a MAC entity receives the TAC MAC CE, and a certain value (N_{TA}) is maintained for the indicated TAG, the MAC entity uses the timing advance command for the indicated TAG or starts or restarts the time alignment timer related to the indicated TAG. The certain value (N_{TA}) may be timing advance between DL and UL.

Operation when the time alignment timer expires may be defined separately for a PTAG and an STAG. Note that a timing advance group (TAG) including an SpCell of a MAC entity may be referred to as a primary timing advance group (PTAG), and a TAG other than the PTAG may be referred to as a secondary timing advance group (STAG).

For example, in Rel. 17, certain operation for PTAG is employed when a timing advance timer corresponding to a PTAG expires, and certain operation for STAG may be employed when a timing advance timer for STAG expires.

For example, when such a time alignment timer expires, the following operation (for example, the certain operation for PTAG/certain operation for STAG) may be performed.

### {Certain Operation for PTAG}

In a case where the time alignment timer is associated with a PTAG,
- flush all the HARQ buffers of all serving cells.
- notify RRC of release of a PUCCH, if configured, for all the serving cells.
- notify RRC of release of an SRS, if configured.
- clear all configured DL assignments and configured UL assignments.
- clear a PUSCH resource for semi-persistent CSI reporting.
- cause all running time alignment timers to expire.
- maintain N_{TA} of all TAGs.

### {Certain Operation for STAG}

In a case where the time alignment timer is associated with an STAG, for all serving cells belonging to the TAG,
- flush all HARQ buffers.
- notify RRC of release of a PUCCH, if configured.
- notify RRC of release of an SRS, if configured.
- clear all configured DL assignments and UL assignments.
- clear a PUSCH resource for semi-persistent CSI reporting.
- maintain N_{TA} of the TAG.

### (Control of UL Transmission Based on Timing Advance)

In future radio communication systems, a case is assumed in which different TAGs (or TAG-IDs) are configured for one or more TRPs (for example, a plurality of TRPs having different PCIs) corresponding to a certain cell (or CC). Alternatively, it is also assumed that, in future radio communication systems, UL transmission is controlled based on timing advance for a serving cell (or a TRP of the serving cell) and a non-serving cell/additional cell (or a TRP of the non-serving cell/additional cell) in inter-cell mobility. Alternatively, a case is also assumed that different TRPs corresponding to a certain cell share a common TAG.

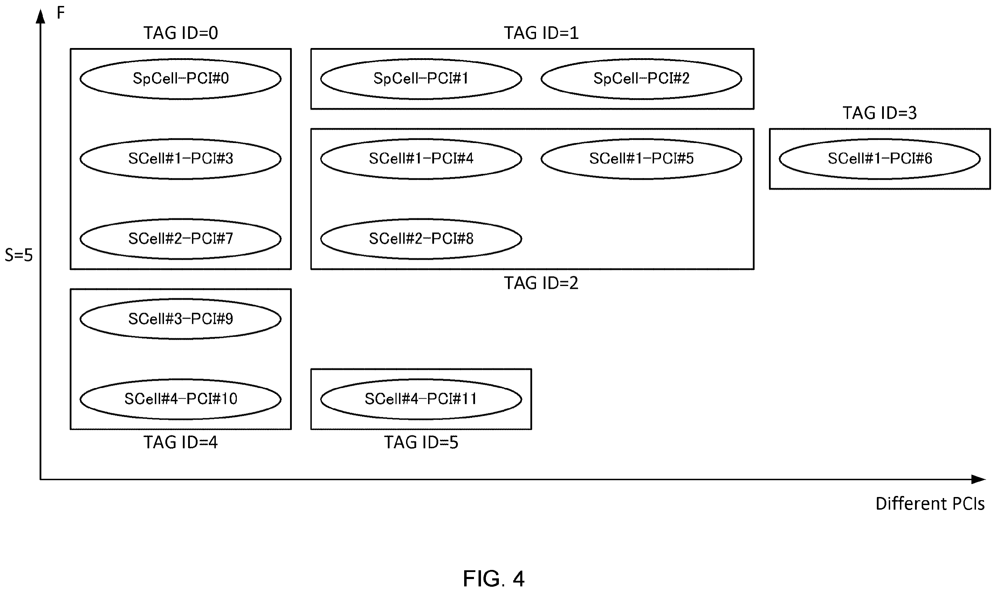

FIG. 4 is a diagram to show an example of a configuration of TAGs each being for a plurality of cells (or TRPs) having different PCIs.

It is also assumed that up to M PCIs (for example, a serving cell + candidate cells associated with the serving cell) can be configured for each CC and that configuration of up to N TAGs (for example, N ≤ M) is supported for the up to M PCIs. In this case, one or a plurality of PCIs may be associated with one TAG.

For up to S serving cells in a cell group (or for up to S serving cells), one or a plurality of PCIs may be associated with one TAG. In this case, up to T TAGs may be configured in consideration of one PCI for each CC (case 1). In other words, up to (T × N) TAGs may be configured for up to (M × S) cells. Alternatively, up to U TAGs may be configured for up to (M × S) cells (case 2).

In this manner, when candidate cells are configured/applied/supported, it is assumed that different serving cells/different candidate cells are associated with the same TAG. The TAGs of the candidate cells may be indicated from the base station, or may be determined based on the TAs of the candidate cells acquired by the UE.

It is also considered that, regarding UL transmission of the candidate cells (for example, the candidate cells indicated with serving cell switch), the UE performs UL transmission in consideration of the TAs corresponding to the candidate cells. When the TAs of the candidate cells are taken into consideration, the UE needs to perform TA acquisition of the candidate cells.

As TA acquisition of the candidate cells, a plurality of TA acquisition methods are considered, such as TA acquisition using a RACH (for example, RACH-based solutions) and TA acquisition not using a RACH (RACH-less solutions). The TA acquisition method may be interpreted as a TA acquisition scheme, a TA acquisition type, or a TA acquisition procedure. In the present disclosure, TA acquisition, TA measurement, TA calculation, TA computation, and TA determination may be interchangeably interpreted.

For example, the UE may acquire the TAs of the candidate cells by transmitting a RACH indicated/triggered by a PDCCH (for example, a PDCCH ordered RACH) to the candidate cells. Information (for example, TA values) related to the TAs of the candidate cells may be included in a response signal (for example, a RAR) of the RACH. The RAR may be transmitted from the serving cell, or may be transmitted from the candidate cells. Alternatively, the TAs of the candidate cells may be acquired by using a RACH triggered by the UE or a RACH triggered from a network in a higher layer. The PDCCH order may be triggered only by a source cell (or the serving cell).

Alternatively, the UE may acquire the TAs of the candidate cells by transmitting a signal other than the RACH to the candidate cells. Information (for example, TA values) related to the TAs of the candidate cells may be indicated from the base station to the UE. As the signal other than the RACH, for example, an SRS may be applied (SRS based TA measurement).

Alternatively, the UE may measure/calculate/acquire the TAs of the candidate cells, based on a DL signal (for example, a downlink reference signal) transmitted from each cell (for example, candidate cell/serving cell). A method in which the UE acquires the TAs of the candidate cells based on DL signal(s) transmitted from one or more cells may be referred to as UE based TA measurement.

In the UE based TA measurement, the downlink reference signal may be a certain DL signal (for example, a synchronization signal block (for example, an SSB)/CSI-RS or the like). For example, the UE may acquire the TAs of the candidate cells by measuring differences of reception timings of DL signals from a plurality of cells (or two cells).

The plurality of cells may include a reference cell (for example, the serving cell). In this case, the UE may calculate necessary TAs of the candidate cells, based on a reception timing of a reference cell (and a TA value of the reference cell) and a timing difference (for example, T) between the reference cell and the candidate cells. The UE may acquire the TAs of the candidate cells by using a timing advance command (TAC) transmitted from the serving cell.

### (Unified/Common TCI Framework)

With a unified TCI framework, a plurality of types of (UL/DL) channels/RSs can be controlled by a common framework. A unified TCI framework may indicate a common beam (common TCI state) and apply the common beam to all the UL and DL channels instead of defining a TCI state or a spatial relation for each channel as in Rel. 15/16, or apply a common beam for UL to all the UL channels while applying a common beam for DL to all the DL channels.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam/unified TCI state may be indicated from the same TCI pool (joint common TCI pool, joint TCI pool, set) for both UL and DL. X (> 1) TCI states may be activated by a MAC CE. UL/DL DCI may select one from the X active TCI states. The selected TCI state may be applied to channels/RSs of both UL and DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥1) of TCI states (UL TCI states) applied to a UL channel/RS and the number M (≥1) of TCI states (DL TCI states) applied to a DL channel/RS may be defined. At least one of N and M may be notified/configured/indicated for the UE via higher layer signaling/physical layer signaling.

In the present disclosure, description "N = M = X (X is any integer)" may mean that X TCI states (joint TCI states) (corresponding to X TRPs) common to UL and DL are notified/configured/indicated for the UE. Description "N = X (X is any integer), M = Y (Y is any integer, Y may equal X)" may mean that X UL TCI states (corresponding to X TRPs) and Y DL TCI states (corresponding to Y TRPs) (in other words, separate TCI states) are each notified/configured/indicated for the UE.

For example, description "N = M = 1" may mean that one TCI state common to UL and DL is notified/configured/indicated for the UE, the TCI state being for a single TRP (joint TCI state for a single TRP).

For example, description "N = 1, M = 1" may mean that one UL TCI state and one DL TCI state for a single TRP are separately notified/configured/indicated for the UE (separate TCI state for a single TRP).

For example, description "N = M = 2" may mean that a plurality of (two) TCI states common to UL and DL are notified/configured/indicated for the UE, the plurality of TCI states being for a plurality of (two) TRPs (joint TCI states for multiple TRPs).

For example, description "N = 2, M = 2" may mean that a plurality of (two) UL TCI states and a plurality of (two) DL TCI states for a plurality of (two) TRPs are notified/configured/indicated for the UE (separate TCI states for multiple TRPs).

Note that in the above examples, cases where N and M values are 1 or 2 are described, but the N and M values may be 3 or more, and N and M may be different from each other.

For Rel. 17, support of N = M = 1 is under study. For example, one common beam being indicated by RRC/MAC CE/DCI may be supported, and the one common beam may be applied to a plurality of DL/UL channels/reference signals. For Rel. 18 or later versions, other cases may be supported.

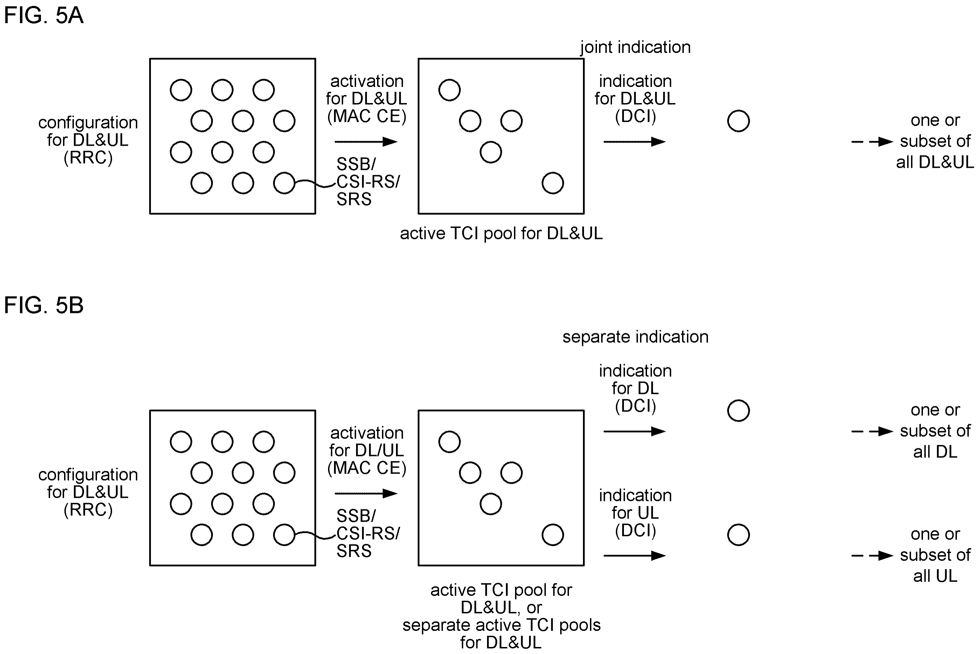

FIG. 5A and FIG. 5B show examples of a unified TCI framework. FIG. 5A shows an example of a joint DL/UL TCI state (for example, a Joint DL/UL TCI state), and FIG. 5B shows an example of a separate TCI state (for example, a Separate TCI (DL TCI state and UL TCI state).

In the example of FIG. 5A, an RRC parameter (information element) configures a plurality of TCI states for both of the DL and the UL. In the present disclosure, TCI states configured by the RRC parameter may be referred to as configured TCI states or configured TCI states. The MAC CE may activate a plurality of TCI states among the plurality of configured TCI states. DCI may indicate one of the plurality of activated TCI states. In the present disclosure, TCI states indicated by the DCI may be referred to as indicated TCI states or indicated TCI states (for example, Indicated TCI state).

The DCI may be UL DCI (for example, DCI used for scheduling of a PUSCH), or may be DL DCI (for example, DCI used for scheduling of a PDSCH). The indicated TCI state may be applied to at least one (or all) of UL/DL channels/RSs. One piece of DCI may indicate both a UL TCI and a DL TCI.

In the example in FIG. 5A, one dot may be one TCI state applied to both UL and DL or may be two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In the example in FIG. 5B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different pieces of DCI may indicate a UL TCI and a DL DCI separately.

In Rel-17 NR (or later versions), it is assumed that beam activation/indication for TCI states associated with different physical cell identifiers (PCIs) is supported by a MAC CE/DCI. In Rel-18 NR (or later versions), it is assumed that indication of serving cell change for cells including different PCIs is supported by a MAC CE/DCI.

The method of configuring/indicating the TCI state (for example, the joint DL/UL TCI state) of FIG. 5A and the method of configuring/indicating application (for example, the separate TCI state) of the TCI state of FIG. 5B may be switched for application. Which is to be applied among the joint DL/UL TCI state and the separate TCI state may be configured from the base station to the UE by a higher layer parameter.

### {Physical Layer Procedure/Antenna Port QCL for Data}

To provide a reference signal for a PDSCH DMRS and a PDCCH DMRS and a CSI-RS in a certain CC, and furthermore, to provide, if a UL TX (transmission) spatial filter for dynamic grant and configured grant based PUSCH and PUCCH resources and an SRS in the certain CC is available, a reference for determination of the UL TCI filter, the UE can be configured with a list of up to 128 DLorJointTCIState (DL or joint TCI state) configurations in PDSCH-Config (PDSCH configuration).

If configuration of DLorJointTCIState or UL-TCIState (UL TCI State) is absent in a BWP in the CC, the UE can apply configuration of DLorJointTCIState or UL-TCIState from a reference BWP of a reference CC. If the UE is configured with DLorJointTCIState or UL-TCIState in any CC in the same band, the UE does not assume that TCI-State, SpatialRelationInfo (spatial relation information), and PUCCH-SpatialRelationInfo (PUCCH spatial relation information) excluding SpatialRelationInfoPos (spatial relation information for position) in the band are configured. The UE assumes that when the UE is configured with TCI-State in any CC in a CC list by simultaneousTCI-UpdateList1-r16 (simultaneous TCI update list 1), simultaneousTCI-UpdateList2-r16 (simultaneous TCI update list 2), simultaneousSpatial-UpdatedList1-r16 (simultaneous spatial updated list 1), or simultaneousSpatial-UpdatedList2-r16 (simultaneous spatial updated list 2), the UE is not configured with DLorJointTCIState or UL-TCIState in any CC of the CCs.

The UE receives an activation command used to map up to eight TCI states and/or TCI state pairs with one TCI state for a DL channel/signal and one TCI state for a UL channel/signal to a DCI field 'Transmission Configuration Indication' (TCI) codepoint for one of CCs/DL BWPs or a set of CCs/DL BWPs, if available. When a set of TCI state IDs is activated for the set of CCs/DL BWPs, and furthermore, for one of the CCs/DL BWPs, if available, the same set of TCI state IDs is applied to all the DL and/or UL BWPs in an indicated CC. Here, an applicable list of CCs is determined by the CC indicated in the activation command. The UE applies this indicated DLorJointTCIState and/or UL-TCIState to one of the CCs/DL BWPs or a set of CCs/DL BWPs if the activation command maps DLorJointTCIState and/or UL-TCIState to only one TCI codepoint, and applies this indicated DLorJointTCIState and/or UL-TCIState to one of the CCs/DL BWPs or a set of CCs/DL BWPs if indicated mapping for one single TCI codepoint is applied.

When bwp-id or cell for a QCL type A/D source RS in QCL-Info with a TCI state with configured DLorJointTCIState is not configured, the UE assumes that the QCL type A/D source RS is configured in a CC/DL BWP to which the TCI state is applied.

### (TCI State Indication)

A Rel-17 unified TCI framework supports modes 1 to 3 below.
{Mode 1} MAC CE based TCI state indication
{Mode 2} DCI based TCI state indication with DL assignment (DCI based TCI state indication by DCI format 1_1/1_2 with DL assignment)
{Mode 3} DCI based TCI state indication without DL assignment (DCI based TCI state indication by DCI format 1_1/1_2 without DL assignment)

The UE with a TCI state configured and activated with a Rel-17 TCI state ID (for example, tci-StateId_r17) receives DCI format 1_1/1_2 for providing an indicated TCI state with the Rel-17 TCI state ID, for one CC, or receives DCI format 1_1/1_2 for providing an indicated TCI state with the Rel-17 TCI state ID, for all the CCs in the same CC list as a CC list configured by simultaneous TCI update list 1 or simultaneous TCI update list 2 (for example, simultaneousTCI-UpdateList1 or simultaneousTCI-UpdateList2). DCI format 1_1/1_2 may be accompanied by DL assignment, if available, or may not be accompanied by DL assignment.

If DCI format 1_1/1_2 is not accompanied by DL assignment, the UE can assume (validate), for the DCI, the following.
- A CS-RNTI is used to scramble a CRC for the DCI.
- Values of the following DCI fields (special fields) are set as follows:
   - redundancy version (RV) fields are all '1's
   - modulation and coding scheme (MCS) fields are all '1's
   - a new data indicator (NDI) field is 0
   - frequency domain resource assignment (FDRA) fields are all '0's for FDRA type 0, are all '1's for FDRA type 1, or are all '0's for dynamic switching (DynamicSwitch) (as with validation of a PDCCH with a DL semi-persistent scheduling (SPS) release or a UL grant type 2 scheduling release).

Note that the DCI in mode 2/mode 3 may be referred to as beam indication DCI.

In Rel. 15/16, if the UE does not support active BWP change via DCI, the UE ignores a BWP indicator field. Such operation is also under study for a relationship between support of a Rel-17 TCI state and interpretation of a TCI field. It is studied that if the UE is configured with a Rel-17 TCI state, a TCI field is always present in DCI format 1_1/1_2 and that if the UE does not support TCI update via DCI, the UE ignores a TCI field.

In Rel. 15/16, whether a TCI field is present (TCI-in-DCI presence information, "tci-PresentInDCI") is configured for each CORESET.

The TCI field in DCI format 1_1 is 0 bit in a case where a higher layer parameter "tci-PresentInDCI" is not enabled, and is 3 bits in a case other than the case. If the BWP indicator field indicates a BWP other than an active BWP, the UE follows the following operation.
{Operation} If a higher layer parameter "tci-PresentInDCI" is not enabled for a CORESET used for a PDCCH for communicating that DCI format 1_1, the UE assumes that "tci-PresentInDCI" is not enabled for all the CORESETs in the indicated BWP, otherwise the UE assumes that "tci-PresentInDCI" is enabled for all the CORESETs in the indicated BWP.

The TCI field in DCI format 1_2 is 0 bit in a case where a higher layer parameter "tci-PresentInDCI-1-2" is not configured, and is 1, 2, or 3 bits determined by the higher layer parameter "tci-PresentInDCI-1-2" in a case other than the case. If the BWP indicator field indicates a BWP other than an active BWP, the UE follows the following operation.
{Operation} If a higher layer parameter "tci-PresentInDCI-1-2" is not configured for a CORESET used for a PDCCH for communicating that DCI format 1_2, the UE assumes that "tci-PresentInDCI" is not enabled for all the CORESETs in the indicated BWP, otherwise the UE assumes that "tci-PresentInDCI-1-2" is configured with the same value as that of "tci-PresentInDCI-1-2" configured for the CORESET used for the PDCCH for communicating that DCI format 1_2, for all the CORESETs in the indicated BWP.

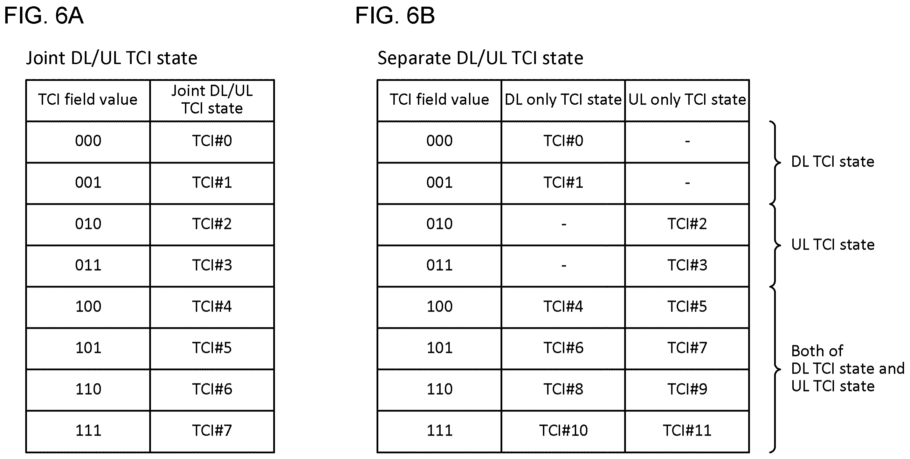

FIG. 6A shows an example of DCI based joint DL/UL TCI state indication. A TCI state ID indicating a joint DL/UL TCI state is associated with a TCI field value for the joint DL/UL TCI state indication.

FIG. 6B shows an example of DCI based separate DL/UL TCI state indication. At least one of a TCI state ID indicating a DL-only TCI state and a TCI state ID indicating a UL-only TCI state is associated with a TCI field value for the separate DL/UL TCI state indication. In this example, TCI field values "000" to "001" are associated with only one TCI state ID for DL, TCI field values "010" to "011" are associated with only one TCI state ID for UL, and TCI field values "100" to "111" are associated with both one TCI state ID for DL and one TCI state ID for UL.

### (Multi-Panel Transmission)

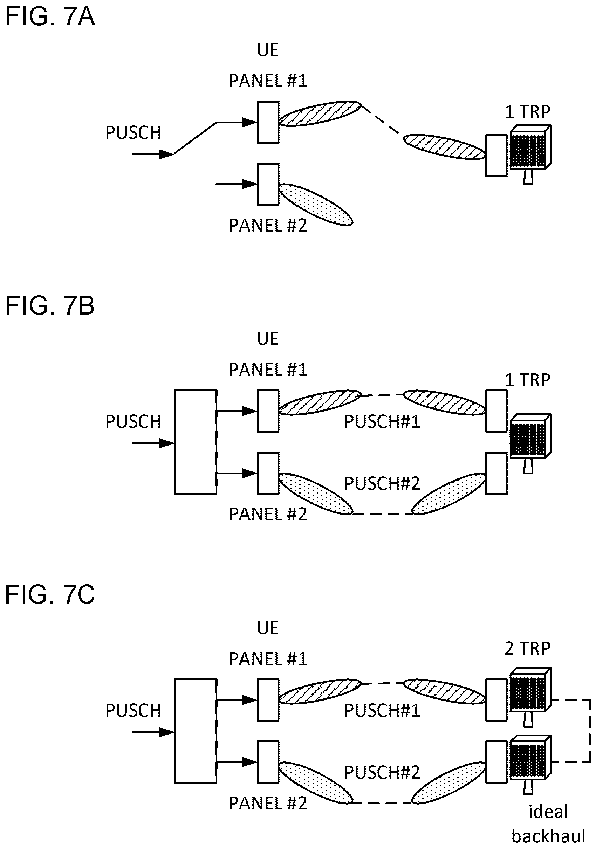

In Rel-15 and Rel-16 UEs, only one beam or panel is used for UL transmission at one time point (FIG. 7A). In Rel. 17 or later versions, to improve throughput and reliability in a UL, simultaneous UL transmission (for example, simultaneous multi-panel UL transmission (STxMP)) of a multi-beam (a plurality of beams) and a multi-panel (a plurality of panels) to one or more transmission/reception points (TRPs) has been under study.

For the simultaneous UL transmission using a multi-beam and a multi-panel, reception performed by one TRP including a multi-panel (FIG. 7B) or reception performed by two TRPs having an ideal backhaul (FIG. 7C) has been under study. A single PDCCH for scheduling of a plurality of PUSCHs (for example, simultaneous transmission of PUSCH #1 and PUSCH #2) has been under study. Support of panel-specific transmission and introduction of a panel ID have been under study.

A base station may configure or indicate panel-specific transmission for UL transmission by using a UL transmission configuration indication (TCI) or the panel ID. A UL TCI (UL TCI state) may be based on signaling similar to a DL beam indication supported in Rel. 15. The panel ID may be implicitly or explicitly applied to transmission of at least one of a target RS resource or a target RS resource set, a PUCCH, an SRS, and a PRACH. When the panel ID is explicitly notified, the panel ID may be configured in at least one of a target RS, a target channel, and a reference RS (for example, DL RS resource configuration or spatial relation information).

In simultaneous UL transmission using a multi-panel, the UE may perform transmission of a plurality of physical uplink control channels (PUCCHs). As transmission schemes of simultaneous UL transmission using a multi-panel for PUCCHs, the following schemes 1 and 2 have been under study.

### {Scheme 1}

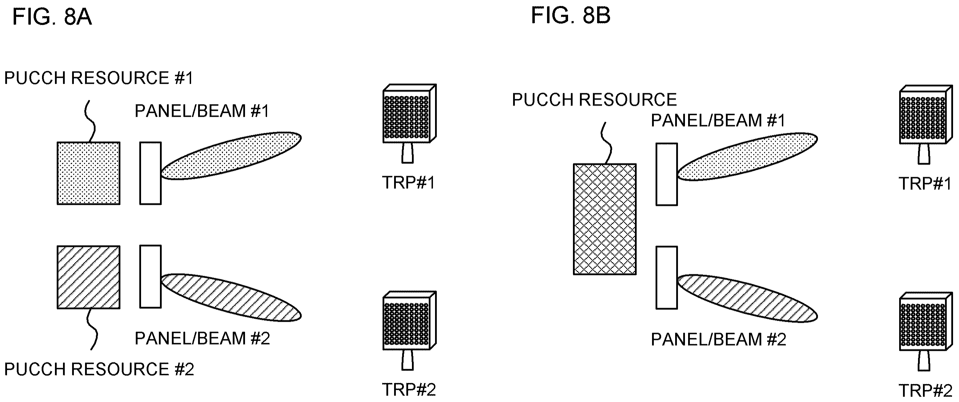

Two PUCCH resources overlap in the time domain and are simultaneously transmitted. Each of the two PUCCH resources is associated with one different panel/beam (see FIG. 8A). The two beams are transmitted to the TRPs, respectively.

### {Scheme 2}

One PUCCH resource is simultaneously transmitted using two panels/spatial relations. The one PUCCH resource is associated with two panels/beams (see FIG. 8B). The two beams are transmitted to the TRPs, respectively.

Note that, although the above has described an example of a case in which the number of multiple panels is 2, in the present disclosure, the number of panels may be 3 or greater. In other words, "2" as the number of panels may be interpreted as a number of 3 or greater.

Note that scheme 2 may be applied to PUCCH repetition transmission (repetition) of a single frequency network (SFN).

In simultaneous UL transmission using a multi-panel, the UE may perform transmission of a plurality of physical uplink shared channels (PUSCHs). As transmission schemes of simultaneous UL transmission using a multi-panel for PUSCHs, the following schemes 3 to 5 have been under study.

### {Scheme 3}

### - Single DCI (S-DCI) based space division multiplexing (SDM) scheme:

In this scheme, different layers/DMRS ports of one PUSCH are separately precoded, and are simultaneously transmitted from different UE beams/panels. Note that, in this scheme, whether to support two CWs (codewords) and whether to perform simultaneous transmission from two different UE beams/panels are problems to be studied.

### {Scheme 4}

### - S-DCI based SFN scheme:

In this scheme, the same layers/DMRS ports of one PUSCH are all simultaneously transmitted from two different UE beams/panels.

### {Scheme 5}

### - M-DCI based PUSCH simultaneous transmission scheme:

In this scheme, two independent PUSCHs associated with different TRPs are simultaneously transmitted in the same active BWP. For example, a total number of layers of two PUSCHs may be up to four layers. Note that the number of layers of each of these two PUSCHs may be defined in a specification, and may be, for example, one to three layers or up to two layers.

In this case, the UE can simultaneously transmit two independent PUSCHs associated with different TRPs in the same active BWP. A total number of layers corresponding to these two PUSCHs may be defined as up to X (or X or less). X may be 4, for example, or may be another value. A maximum number of layers of each of two PUSCHs may be X/2 (for example, 2), or may be another value.

More specifically, regarding multi-DCI based STxMP, in scheduling of the PUSCH for PUSCH simultaneous transmission (for example, STxMP PUSCH + PUSCH transmission), SRS resource sets and CORESET pool indices may be associated based on a certain rule. For example, a first SRS resource set may be associated with a first CORESET pool index (for example, 0), and another SRS resource set may be associated with a second CORESET pool index (for example, 1).

The PUSCH may be associated with the SRS resource set having the same CORESER pool index value. For example, the PUSCH may be associated with the SRS resource set associated with the CORESER pool index of the CORESET corresponding to the PDCCH for scheduling the PUSCH.

Methods of interpreting the SRI/TPMI field in DCI may be different between a dynamic grant based PUSCH (for example, a DG-PUSCH)) and a configured grant based PUSCH (for example, a type 2 CG-PUSCH).

In a case of the DG-PUSCH, the indicated SRI/TPMI field may correspond to the SRS resource set associated with the same value as the CORESET pool index of the CORESET used to receive DCI (for example, scheduling DCI format 0_1/0_2) for scheduling the PUSCH. In a case of the type 2 CG-PUSCH, the indicated SRI/TPMI field may correspond to the SRS resource set associated with the same value as the CORESER pool index of the CORESET used to receive activation DCI.

In a case of a type 1 CG-PUSCH, one SRS resource set index may be configured for an RRC parameter (for example, ConfiguredGrantConfig) associated with a configured grant, and a certain RRC parameter (for example, srs-ResourceIndicator/precodingAndNumberOfLayers) may correspond to the SRS resource set.

Regarding multi-DCI based STxMP (for example, PUSCH + PUSCH), it is also assumed to separately configure the numbers of SRS resources/SRS ports (or the numbers of SRS ports)/maximum ranks (for example, maxrank)/codebook subsets/full power modes for two panels/TRPs, in consideration of asymmetrical panels. The asymmetrical panels may mean that two panels have different capabilities for the numbers of SRS ports/maximum ranks/codebook subsets, and the like.

For example, when two SRS resource sets are configured for multi-DCI based STxMP (for example, PUSCH + PUSCH), certain parameters corresponding to the two configured SRS resource sets may be separately configured. The certain parameters may be at least one of the number of SRS resources, the maximum rank/maximum number of SSB indices (for example, maxRank/Lmax), the codebook subset, and the full power mode (for example, fullpower mode), for example.

### (UL TCI State)

As described above, as a UL beam indication method, the use of the UL TCI state has been under study. Notification of the UL TCI state is similar to notification of the DL beam (DL TCI state) of the UE. Note that the DL TCI state may be interchangeably interpreted as a TCI state for a PDCCH/PDSCH.

A channel/signal (which may be referred to as a target channel/RS) for which the UL TCI state is configured (indicated) may be at least one of a PUSCH (a PUSCH DMRS), a PUCCH (a PUCCH DMRS), a random access channel (Physical Random Access Channel (PRACH)), an SRS, and the like, for example.

For example, the RS (source RS) to have a QCL relationship with the channel/signal may be a DL RS (for example, an SSB, a CSI-RS, a TRS, or the like), or may be a UL RS (for example, an SRS, an SRS for beam management, or the like).

In the UL TCI state, the RS to have a QCL relationship with the channel/signal may be associated with the panel ID for receiving or transmitting the RS. The association may be explicitly configured (or indicated) by higher layer signaling (for example, RRC signaling, a MAC CE, or the like), or may be implicitly determined.

Correspondence between the RS and the panel ID may be configured by being included in UL TCI state information, or may be configured by being included in at least one of resource configuration information, spatial relation information, and the like of the RS.

QCL types indicated by the UL TCI state may be existing QCL types A to D, may be other QCL types, or may include certain spatial relation, a related antenna port (port index), or the like.

When the UE is indicated with a related panel ID (for example, indicated by DCI) regarding UL transmission, the UE may perform the UL transmission by using a panel corresponding to the panel ID. The panel ID may be associated with the UL TCI state, and when the UE is indicated (or activated) with the UL TCI state regarding a certain UL channel/signal, the UE may identify a panel to be used for transmission of the UL channel/signal in accordance with the panel ID related to the UL TCI state.

The UL/DL TCI state and the separate TCI state may be interchangeably interpreted.

### (Analysis)

Incidentally, in Rel. 18 or later versions, in multi-DCI based multi-TRP operation, supporting two timing advances (TAs) has been under study. In single DCI based multi-TRP operation, extending power control to the unified TCI framework has been under study. As described above, some scenarios are assumed in which simultaneous UL transmission from a plurality of panels is supported.

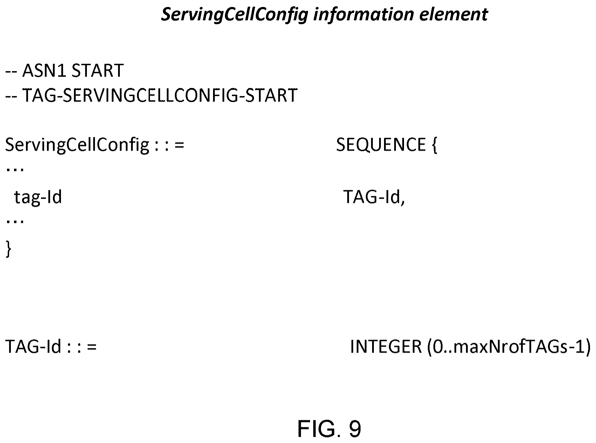

As described above, in existing specifications, the timing advance group (TAG) may be configured for each cell. A parameter corresponding to the TAG ID indicating the TAG may be configured/indicated by a higher layer parameter (for example, ServingCellConfig) related to a serving cell configuration (see FIG. 9). The TAG ID may be expressed by an integer from 0 to maxNrofTAGs - 1. For example, in Rel. 17, maxNrofTAGs is 4.

In Rel. 17, when one of the Rel-15/16 TCI framework and the Rel-17 unified framework is configured/applied, such control is performed that the other is not configured/applied. For example, when the unified TCI state (for example, dl-OrJoint-TCIStateList or UL-TCI-State) is configured in one of the CCs/cells in the same band, the UE may expect that the Rel-15/16 TCI framework (for example, Tci-StatesToAddModList, SpatialRelationInfo, or PUCCH-SpatialRelationInfo) is not configured.

In Rel. 18 or later versions, it is also assumed that two TAs are supported for both of the Rel-15/16 TCI framework and the Rel-17 unified TCI framework.

When the Rel-17 unified TCI framework is applied, it is considered that the TAG ID is associated with the UL TCI/joint TCI. On the other hand, when the Rel-15/16 TCI framework is applied, how the TAG ID is configured/controlled has not been fully studied.

For example, how to handle the TA/TAG presents a problem in UL transmissions of the PUCCH, the dynamic grant based PUSCH (for example, the DG-PUSCH)), the configured grant based PUSCH (for example, the type 2 CG-PUSCH), various SRSs, and the like, to which spatial relation supported in Rel. 15/16 may be applied/configured. When the TA/TAG cannot be appropriately configured/controlled, communication throughput may increase, which may suppress enhancement in communication quality.

In view of this, the inventors of the present invention studied handling of TA/TAG when spatial relation is configured/applied in a serving cell in which a plurality of TAs are supported, and came up with the idea of an example of the present embodiment.

Embodiments according to the present disclosure will be described in detail with reference to the drawings as follows. Note that the aspects (for example, cases) below may each be employed individually, or may be employed in combination of at least two.

### (Various Interpretations etc.)

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, another message (for example, a message from a core network, such as a positioning protocol (for example, NR Positioning Protocol A (NRPPa)/LTE Positioning Protocol (LPP)) message), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the present disclosure, a panel, a UE panel, a panel group, a beam, a beam group, a precoder, an Uplink (UL) transmission entity, a transmission/reception point (TRP), a base station, spatial relation information, a spatial relation, an SRS resource indicator (SRI), a control resource set (CORESET), a Physical Downlink Shared Channel (PDSCH), a codeword (CW), a transport block (TB), a reference signal (RS), an antenna, an antenna element, a layer, transmission, a port, an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information", "one or a plurality of pieces of spatial relation information", and the like. The TCI state and the TCI may be interchangeably interpreted.

In the present disclosure, an index, an ID, an indicator, and a resource ID may be interchangeably interpreted. In the present disclosure, a sequence, a list, a set, a group, a cluster, a subset, and the like may be interchangeably interpreted.

In the present disclosure, a TRP index, a CORESET pool index (CORESETPoolIndex), a pool index, a group index, and the like may be interchangeably interpreted.

In the present disclosure, a single PDCCH (DCI) may be referred to as a PDCCH (DCI) of a first scheduling type (for example, scheduling type A (or type 1)). A multi-PDCCH (DCI) may be referred to as a PDCCH (DCI) of a second scheduling type (for example, scheduling type B (or type 2)).

In the present disclosure, regarding the single DCI, an i-th TRP (TRP #i) may mean an i-th TCI state, an i-th CDM group, or the like (i is an integer). Regarding the multi-DCI, an i-th TRP (TRP #i) may mean a CORESET corresponding to CORESET pool index = i, an i-th TCI state, an i-th CDM group, or the like (i is an integer).

In the present disclosure, a multi-TRP (MTRP, M-TRP), a multi-TRP system, multi-TRP transmission, and a multi-PDSCH may be interchangeably interpreted.

In the present disclosure, a single DCI (sDCI), a single PDCCH, a multi-TRP system based on a single DCI, an sDCI based MTRP, scheduling of a plurality of PUSCHs (corresponding to different spatial relations/SRIs) using one DCI, sDCI based MTRP transmission, and activation of two TCI states on at least one TCI code point may be interchangeably interpreted.

In the present disclosure, a multi-DCI (mDCI), a multi-PDCCH, a multi-TRP system based on a multi-DCI, an mDCI based MTRP, mDCI based MTRP transmission, use of a multi-DCI for the MTRP, scheduling of a plurality of PUSCHs (corresponding to different spatial relations/SRIs) using two DCIs, and configuration of two CORESET pool indices or CORESET pool index = 1 (or a value of 1 or greater) may be interchangeably interpreted.

Repetitions of the present disclosure may be interchangeably interpreted as MTRP based repetitions, repetitions of Rel. 17, repetitions applying different spatial relations, repetition PUSCHs, repetition PUCCHs, repetition transmission, and the like. Repetition transmission in the following embodiments may correspond to at least one of repetition transmission type A, repetition transmission type B, and another repetition transmission type.

Note that, in the repetition PUSCHs, the same code word/transport block may be transmitted in each PUSCH (each repetition). The repetition PUSCHs may be interchangeably interpreted as a plurality of PUSCHs having the same contents (for example, data/code word/transport block).

In the following embodiments, a TRP ID may be interpreted as a CORESET pool index (CORESETPoolIndex), or may be interpreted as a new ID related to TA. Regarding the new ID related to TA, when a value is different, it may indicate that different TA is applied to UL transmission.

In the following embodiments, a "plurality of" and "two" may be interchangeably interpreted. A "TAG" and a "TAG ID" may be interchangeably interpreted. A "cell," a "CC," and a "carrier" may be interchangeably interpreted. In the following embodiments, "calculate", "calculate", and "acquire" may be interchangeably interpreted.

The following description may be applied in a configuration in which a plurality of TRPs/CORESET pool indices/panels are supported for a cell, may be applied in inter-cell mobility (for example, L1/L2 inter cell mobility), or may be applied in communication control other than inter-cell mobility. L1/L2 inter-cell mobility may be interpreted as at least one of cell switching, cell switch, and cell change.

### (Radio Communication Method)

### <First Embodiment>

A first embodiment relates to an association between the timing advance group (TAG) ID and the spatial relation.

The following will describe a case in which the multi-TRP (or a plurality of CORESET pool indices/multi-panel) is configured for a certain serving cell and timing advance (TA) for each TRP is supported/applied. As a matter of course, applicable cases are not limited to this.

For the serving cell, the multi-TRP (or a plurality of CORESET pool indices) and application of timing advance (TA) for each TRP may be configured. Whether application of the multi-TRP/application of TA for each TRP is configured may be configured/enabled/activated by a higher layer parameter. The UE may determine application of the multi-TRP/application of TA for each TRP, based on a higher layer parameter configuration (for example, the higher layer parameter ServingCellConfig).

The TAG ID may be associated with spatial relation information (spatial relation info). The spatial relation information may be interpreted as spatial relation. For example, the UE may determine TA to be applied to UL transmission, based on at least one of the higher layer parameter (for example, serving cell configuration information) related to the serving cell and the TAG associated with the spatial relation information corresponding to the UL transmission.

In the association between the TAG ID and the spatial relation information, at least one of option 1-1 to option 1-5 may be applied.

### {Option 1-1}

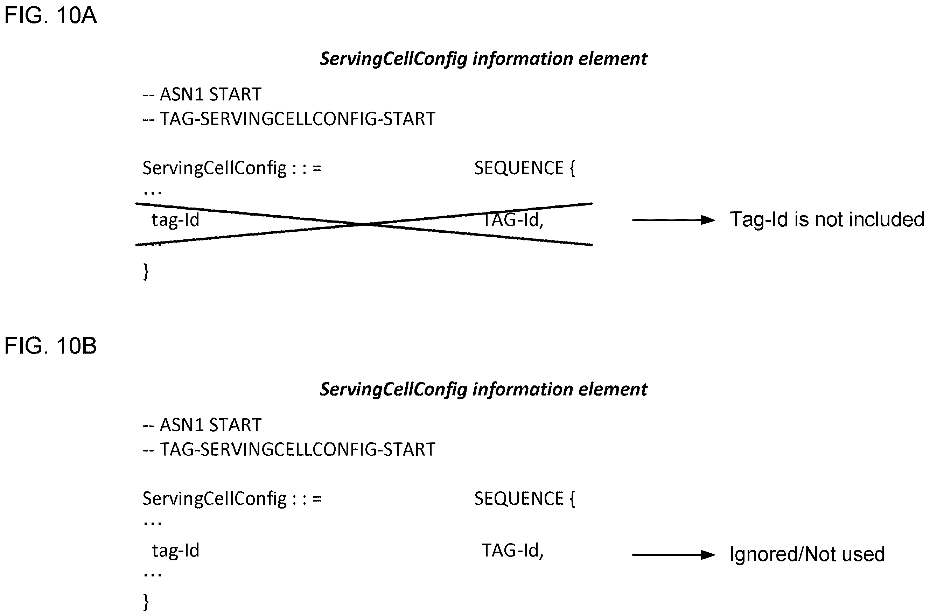

When the TAG ID is associated with/configured for the spatial relation information, the TAG ID may be absent in ServingCellConfig. In this case, the UE may assume that a parameter (for example, tag-Id or TAG-Id) corresponding to the TAG ID is not included in the higher layer parameter (for example, ServingCellConfig) related to the serving cell (see FIG. 10A).

In option 1-1, the UE may control UL transmission according to the TAG ID with/for which the spatial relation information is associated/configured (for example, may determine TA based on the TAG ID).

In each option, information related to the association between the spatial relation information and the TAG ID may be configured/indicated from the base station to the UE, using an RRC parameter/MAC CE, or the like. For example, in a higher layer parameter related to the spatial relation information, the association between the spatial relation information and the TAG ID may be configured. The higher layer parameter related to the spatial relation information may be configured for each UL channel/UL signal (for example, the PUCCH/PUSCH/SRS), or may be configured/applied in common for a plurality of UE channels/UL signals (for example, the PUSCH and the SRS).

### {Option 1-2}

When the TAG ID is associated with/configured for the spatial relation information, the UE may ignore the TAG ID provided by ServingCellConfig (see FIG. 10B). In other words, even when the TAG ID is included in ServingCellConfig, the UE may assume that the TAG ID is not included in ServingCellConfig.

In option 1-2, similarly to option 1-1, the UE may control UL transmission according to the TAG ID with/for which the spatial relation information is associated/configured (for example, may determine TA based on the TAG ID). To summarize option 1-1 and option 1-2, the UE may assume that the TAG ID is not included in ServingCellConfig, regardless of presence or absence of the TAG ID.

### {Option 1-3}

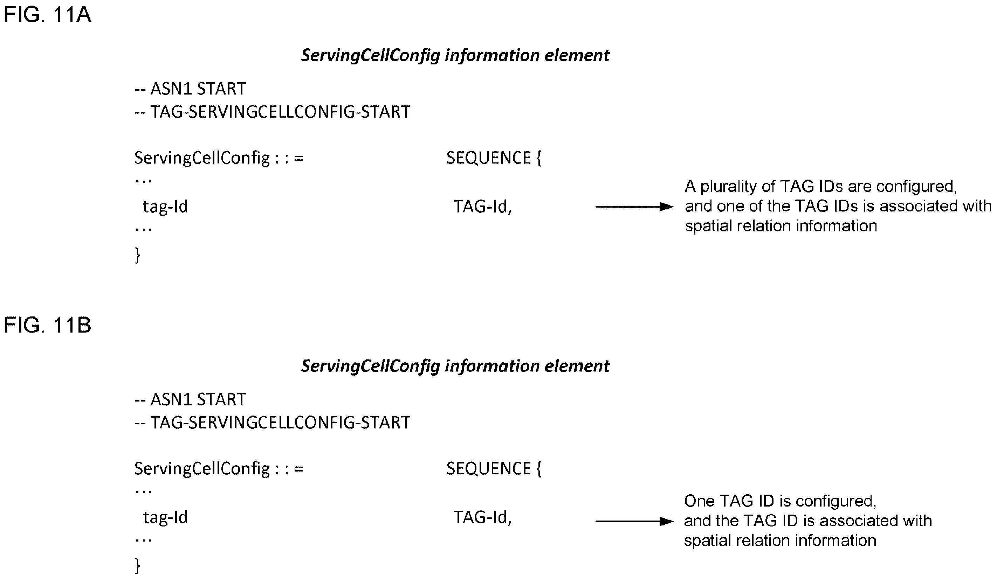

The TAG ID associated with/configured for the spatial relation information may be expressed by an integer from 0 to maxNrofTAGs - 1. In ServingCellConfig, a plurality of (for example, two) TAG IDs may be configured (may be included). In option 1-3, the UE may expect that the TAG ID with/for which the spatial relation information is associated/configured is one (or at least one) of the (for example, two) TAG IDs configured in servingCellConfig (see FIG. 11A).

### {Option 1-4}

The TAG ID associated with/configured for the spatial relation information may be expressed by an integer from 0 to maxNrofTAGs - 1. In ServingCellConfig, one TAG ID may be configured (may be included). In option 1-4, the UE may expect that the TAG ID with/for which the spatial relation information is associated/configured is the same as the TAG ID configured in servingCellConfig (see FIG. 11B).

### {Option 1-5}

As described in option 1-3, in ServingCellConfig, a plurality of (for example, two) TAG IDs may be configured (may be included). In this case, in order to select one of the two TAG IDs configured in servingCellConfig, a 1-bit indicator may be associated with/configured for the spatial relation information.

For example, when the indicator is "0", it may indicate the TAG ID having the smaller index, and when the indicator is "1", it may indicate the TAG ID having the larger index. The relationship between the values of the indicator and the TAG IDs may be reversed. In other words, when the indicator is "0", it may indicate the TAG ID having the larger index, and when the indicator is "1", it may indicate the TAG ID having the smaller index.

In Rel. 18 or later versions, the value of maxNrofTAGs may be the same as or larger than that of Rel. 17 (for example, 4). For example, when the value of maxNrofTAGs is larger than that of Rel. 17, more TAG IDs can be indicated, and flexible control of TA can be performed.

According to the first embodiment described above, the UE can appropriately determine timing advance.

### <Second Embodiment>

A second embodiment relates to handling of the TAG ID when the spatial relation information is not provided/configured for the UL channel/UL signal (for example, the PUCCH/SRS/PUSCH).

The following will describe a case in which the multi-TRP (or a plurality of CORESET pool indices/multi-panel) is configured for a certain serving cell and timing advance (TA) for each TRP is supported/applied. As a matter of course, applicable cases are not limited to this.

For the serving cell, the multi-TRP (or a plurality of CORESET pool indices) and application of timing advance (TA) for each TRP may be configured. Whether application of the multi-TRP/application of TA for each TRP is configured may be configured/enabled/activated by a higher layer parameter. The UE may determine application of the multi-TRP/application of TA for each TRP, based on a higher layer parameter configuration (for example, the higher layer parameter ServingCellConfig).

The first embodiment has described the association between the TAG ID and the spatial relation information. When the spatial relation information is not provided/configured for UL transmission (or the UL channel/UL signal), which TAG is to be applied to the UL transmission presents a problem. In other words, a case is also assumed in which, when one or more TAs/TAGs are supported, there is a UL channel/UL signal (for example, a PUCCH/SRS/PUSCH) for which the spatial relation information is not provided/configured.

The UE may determine timing advance to be applied to UL transmission, based on at least one of the serving cell configuration information and whether or not the spatial relation information corresponding to the UL transmission is provided.

When the spatial relation information is not provided for the UL channel/UL signal (for example, the PUCCH/SRS/PUSCH), at least one (or a combination of two or more) of the following options may be applied.

### {Option 2-1}

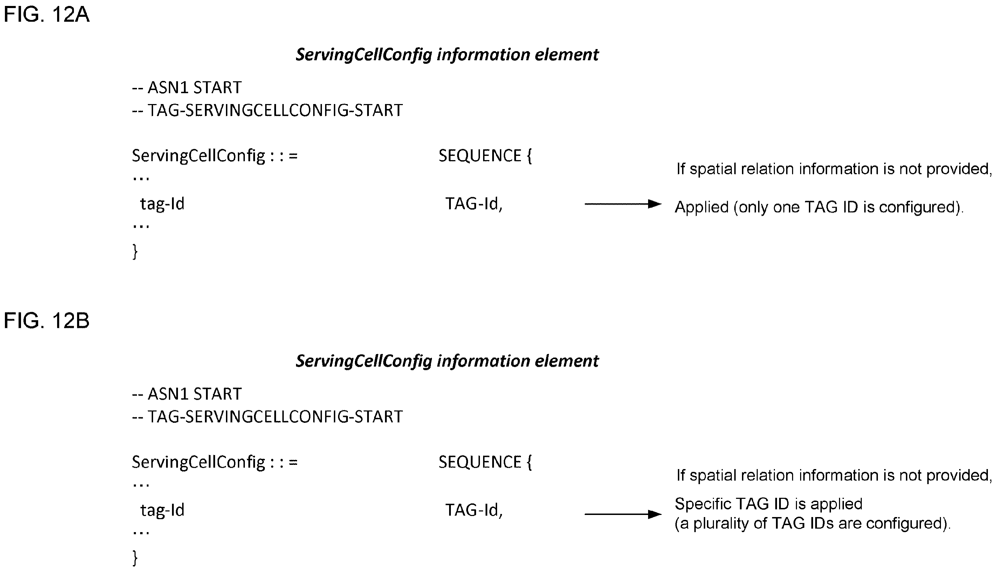

In transmission of the UL channel/UL signal, the UE may apply the TAG ID configured in a certain higher layer parameter. In this case, the (number of) TAG IDs configured in the certain higher layer parameter may be one. Alternatively, the UE may assume that the number of TAG IDs configured in the certain higher layer parameter is one. The certain higher layer parameter may be the higher layer parameter (servingCellConfig) related to the serving cell, for example (see FIG. 12A).

### {Option 2-2}

By default, the UE may apply a specific TAG out of a plurality of TAGs (for example, the first TAG/second TAG) corresponding to a cell (see FIG. 12B). The first TAG/second TAG may be interpreted as a TAG having the smaller TAG ID/TAG having the larger TAG ID. The specific TAG may be determined based on a certain condition (for example, an index). For example, the UE may apply the TAG ID having the smaller/larger index out of a plurality of (for example, two) TAG IDs configured in a certain higher layer parameter (for example, servingCellConfig).

In this case, the (number of) TAG IDs configured in servingCellConfig may be two. The UE may assume that the number of TAG IDs configured in servingCellConfig is two.

### {Option 2-3}

When a plurality of (for example, two) SRS resource sets are configured, the TAG may be associated for each SRS resource set. For example, when a plurality of (for example, two) SRS resource sets are configured, a plurality of SRS resource sets (for example, the first SRS resource set/second SRS resource set) may be associated with different TAGs (for example, the first TAG/second TAG) corresponding to a cell. The SRS resource sets may be SRS resource sets for the CB or the NCB (for example, usage = CB/NCB).

For example, the first SRS resource set (for example, the SRS resource set having the smaller ID) may be associated with the first TAG (for example, the TAG having the smaller TAG ID), and the second SRS resource set (for example, the SRS resource set having the larger ID) may be associated with the second TAG (for example, the TAG having the larger TAG ID).

Information related to the association between the SRS resource set and the TAG (or the TAG ID) may be configured/indicated from the base station to the UE, using an RRC parameter/MAC CE, or the like. In a certain higher layer parameter, the association between the SRS resource set and the TAG ID may be configured. The certain higher layer parameter may be a higher layer parameter (for example, SRS-Config) related to an SRS configuration, or may be another higher layer parameter.

The UE may determine the TAG ID to be applied, based on the SRS resource set corresponding to UL transmission. For example, when the UE receives information (RRC/MAC CE/DCI) indicating the SRS resource set, the UE may determine TA of UL transmission (for example, the SRS/PUSCH), based on the TAG ID associated with the indicated SRS resource set.

### {Option 2-4}

The TAG to be applied by the UE may be autonomously determined out of a plurality of TAGs (for example, the first TAG/second TAG) corresponding to a cell (UE implementation). The UE may select and apply one of the plurality of TAGs (for example, the first TAG/second TAG) corresponding to the cell.

In option 2-1 to option 2-4, for the TAG of the cell, two TAGs explicitly configured for the cell by a certain higher layer parameter (for example, servingCellConfig) or the TAG ID associated with (or configured for) the spatial relation information of the cell may be referred to.

By employing the second embodiment, when the association between the spatial relation information and the TAG is supported, the UE can appropriately determine the TAG/TA to be used for UL transmission even when the spatial relation information is not provided/configured.

### <Third Embodiment>

A third embodiment relates to an application condition (restriction) for the association between the TAG ID and the spatial relation information.

When the TAG is associated with the unified TCI state (UL/joint TCI state), such a restriction is imposed that an activated TCI state associated with the same CORESET pool index (or the TRP/TRP group) corresponds to the same TAG. On the other hand, when the TAG is associated with the spatial relation information, a certain restriction/condition may be imposed on the association.

The following will describe a case in which the multi-TRP (or a plurality of CORESET pool indices/multi-panel) is configured for a certain serving cell and timing advance (TA) for each TRP is supported/applied. As a matter of course, applicable cases are not limited to this.

For the serving cell, the multi-TRP (or a plurality of CORESET pool indices) and application of timing advance (TA) for each TRP may be configured. Whether application of the multi-TRP/application of TA for each TRP is configured may be configured/enabled/activated by a higher layer parameter. The UE may determine application of the multi-TRP/application of TA for each TRP, based on a higher layer parameter configuration (for example, the higher layer parameter ServingCellConfig).

When the UE performs UL transmission based on SRS resources configured by configuration information (for example, SRS-Config) related to the SRS, the UE may determine TA to be applied to the UL transmission, based on the TAG associated with the SRS resources corresponding to the SRS resources.

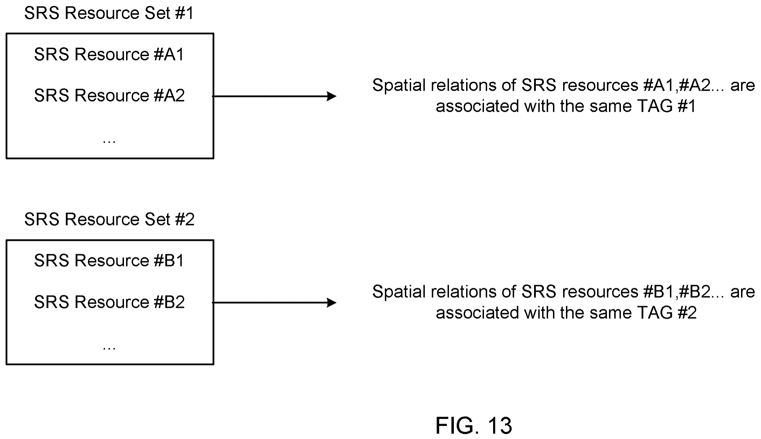

When a plurality of (for example, two) SRS resource sets are configured, the spatial relation of the SRS resources in the same SRS resource set may be associated with the same TAG (see FIG. 13). FIG. 13 shows a case in which the spatial relation of SRS resources #A1 and #A2 included in SRS resource set #1 is associated with the same TAG (for example, TAG #1) and the spatial relation of SRS resources #B1 and #B2 included in SRS resource set #2 is associated with the same TAG (for example, TAG #2).

The UE may expect that the spatial relation of the SRS resources in the same SRS resource set corresponds to one TAG. The SRS resource sets may be SRS resource sets for the CB or the NCB (for example, usage = CB/NCB).

Information related to the association between the SRS resource set and the TAG (or the TAG ID) may be configured/indicated from the base station to the UE, using an RRC parameter/MAC CE, or the like. In a certain higher layer parameter, the association between the SRS resource set and the TAG ID may be configured. The certain higher layer parameter may be a higher layer parameter (for example, SRS-Config) related to the SRS configuration (configuration information related to the SRS), or may be another higher layer parameter.

Consequently, the UE can determine the TAG/TA, based on the SRS resource corresponding to UL transmission.

When UL transmission (for example, the PUCCH/SRS/PUSCH) is scheduled/triggered by DCI, the TAG associated with the spatial relation of the UL transmission may be determined based on the CORESET pool index associated with the DCI. For example, the UE may expect that the spatial relation of the PUCCH/SRS/PUSCH scheduled/triggered by the DCI associated with the same CORESET pool index is associated with (or corresponds to) the same TAG. The PUCCH/SRS/PUSCH may be a dynamic PUCCH/SRS/PUSCH.

### <Fourth Embodiment>

A fourth embodiment relates to an association between the SRS resources and the TAG in NCB based PUSCH transmission.

The following will describe a case in which the multi-TRP (or a plurality of CORESET pool indices/multi-panel) is configured for a certain serving cell and timing advance (TA) for each TRP is supported/applied. As a matter of course, applicable cases are not limited to this.

For the serving cell, the multi-TRP (or a plurality of CORESET pool indices) and application of timing advance (TA) for each TRP may be configured. Whether application of the multi-TRP/application of TA for each TRP is configured may be configured/enabled/activated by a higher layer parameter. The UE may determine application of the multi-TRP/application of TA for each TRP, based on a higher layer parameter configuration (for example, the higher layer parameter ServingCellConfig).

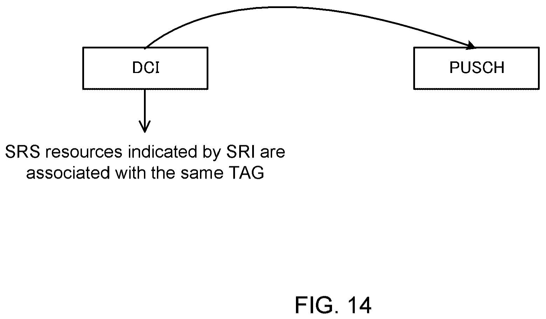

In NCB based PUSCH transmission, one or a plurality of SRS resources (for example, NCB SRS resources) may be indicated by an SRS resource indication (SRI) included in DCI. The DCI including an SRI field may be DCI used for scheduling of the PUSCH, or may be other DCI. In this case, in determination of the TAG, a plurality of SRS resources indicated by the SRI may be associated with the same TAG (see FIG. 14).

The UE may expect that the SRS resources indicated by the SRI are associated with the same TAG in NCB based PUSCH transmission.

The association between the SRS resources and the TAG may be an association between the spatial relation of the SRS (or the SRS resources) and the TAG. For example, the UE may expect that the spatial relation of the SRS resources (for example, the plurality of SRS resources) indicated by the SRI is associated with the same TAG.

The association between the SRS resources and the TAG may be performed using another method.

For example, the TAG may be configured for each SRS resource, the CORESET pool index may be configured for each SRS resource, and the TAG and the CORESER pool index may be associated. In this case, one TAG may correspond to the same CORESET pool index (in other words, the SRS resources corresponding to the same CORESET pool index may correspond to the same TAG).

As a variation, the UE may expect that the SRS resources (for example, the plurality of SRS resources) indicated by the SRI are associated with the same CORESER pool index.

### <Fifth Embodiment>

A fifth embodiment relates to calculation of a precoder in NCB based PUSCH transmission.

In an NCB based PUSCH, the UE can calculate a precoder to be used for SRS transmission (SRS Tx), based on measurement of associated CSI-RS resources (for example, associated NZP CSI-RS-resource). The associated CSI-RS may be configured for each SRS resource. For example, for the UE, when a certain parameter (for example, usage) in a higher layer parameter (for example, SRS-ResourceSet) related to the SRS resource set is configured with a non-codebook (for example, nonCodebook), only one CSI-RS resource (for example, NZP CSI-RS) resource may be configured for each SRS resource set.

In NCB based transmission, the UE need not expect that both of a higher layer parameter (for example, associatedCSI-RS in SRS-ResourceSet) for the SRS resource set and the spatial relation information (for example, spatialRelationInfo) for the SRS resources are configured.

For example, when the associated CSI-RS is provided, it is also assumed that the spatial relation is not provided. On the other hand, when the TAG is associated with the spatial relation (or the spatial relation information), the spatial relation information is required for determination of the TAG.

Thus, at least one of the following option 5-1 to option 5-2 may be applied to NCB based PUSCH transmission.

The following will describe a case in which the multi-TRP (or a plurality of CORESET pool indices/multi-panel) is configured for a certain serving cell and timing advance (TA) for each TRP is supported/applied. As a matter of course, applicable cases are not limited to this.

For the serving cell, the multi-TRP (or a plurality of CORESET pool indices) and application of timing advance (TA) for each TRP may be configured. Whether application of the multi-TRP/application of TA for each TRP is configured may be configured/enabled/activated by a higher layer parameter. The UE may determine application of the multi-TRP/application of TA for each TRP, based on a higher layer parameter configuration (for example, the higher layer parameter ServingCellConfig).

### {Option 5-1}

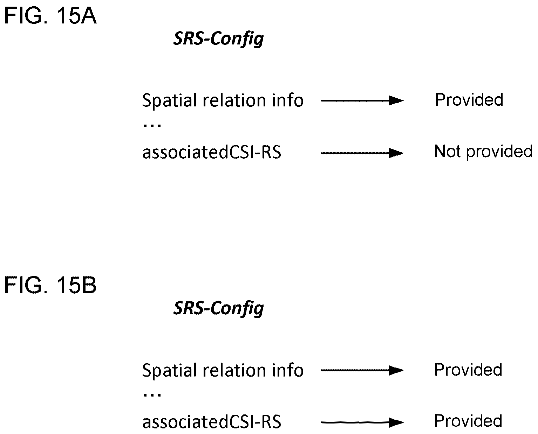

For an NCB based SRS, the spatial relation information may be provided, and an associated CSI-RS may not be provided. For example, in the SRS configuration (for example, SRS-Config), the UE may expect that the spatial relation information (spatial relation info) is configured and the associated CSI-RS (associatedCSI-RS) is not configured for the NCB based SRS (see FIG. 15A).

The UE may determine the precoder for SRS transmission and also determine the TAG, based on the spatial relation information.

Option 5-1 may be applied to a certain condition. The certain condition may be a case in which a plurality of TRPs are configured for the serving cell and TA for each TRP is applied, or may be a case in which a certain higher layer parameter is configured.

### {Option 5-2}

For the NCB based SRS, both of the spatial relation information and an associated CSI-RS may be provided. For example, in the SRS configuration (for example, SRS-Config), the UE may expect that both of the spatial relation information (spatial relation info) and the associated CSI-RS (associatedCSI-RS) are configured for the NCB based SRS (see FIG. 15B).

The UE may calculate a precoder for SRS transmission based on the associated CSI-RS, and apply the spatial relation information only to determination of the TAG.

Option 5-2 may be applied to a certain condition. The certain condition may be a case in which a plurality of TRPs are configured for the serving cell and TA for each TRP is applied, or may be a case in which a certain higher layer parameter is configured.

### {Variations}

Option 5-1/option 5-2 may be applied to SRS transmission/PUSCH transmission in the unified TCI state.

For example, in the unified TCI state of Rel. 17 or later versions, it is also assumed that such a restriction is introduced that the UE does not expect that both of an SRS TCI state (for example, SRS-TCI-State) for the SRS resources and a higher layer parameter for the SRS resource set (for example, associatedCSI-RS in SRS-ResourceSet) are configured. In this case, at least one of the following option 5-1' to option 5-2' may be applied.

The following will describe a case in which the multi-TRP (or a plurality of CORESET pool indices/multi-panel) is configured for a certain serving cell and timing advance (TA) for each TRP is supported/applied. As a matter of course, applicable cases are not limited to this.

For the serving cell, the multi-TRP (or a plurality of CORESET pool indices) and application of timing advance (TA) for each TRP may be configured. Whether application of the multi-TRP/application of TA for each TRP is configured may be configured/enabled/activated by a higher layer parameter. The UE may determine application of the multi-TRP/application of TA for each TRP, based on a higher layer parameter configuration (for example, the higher layer parameter ServingCellConfig).

### {Option 5-1'}

For the NCB SRS, the SRS TCI state (for example, SRS-TCI-State) may be provided, and an associated CSI-RS (for example, associatedCSI-RS) may not be provided. For example, in NCB based PUSCH transmission, the UE may expect that the SRS TCI state is configured and the associated CSI-RS is not provided for the NCB SRS.

### {Option 5-2'}

For the NCB based SRS, both of the SRS TCI state (for example, SRS-TCI-State) and an associated CSI-RS may be provided. For example, in the SRS configuration (for example, SRS-Config), the UE may expect that both of the SRS TCI state (for example, SRS-TCI-State) and the associated CSI-RS are configured.

The UE may calculate a precoder for SRS transmission based on the associated CSI-RS, and apply the SRS TCI state (for example, SRS-TCI-State) to determination of the TAG.

### {Variations}

When an associated CSI-RS is provided/configured for the NCB based SRS, the TAG ID may be associated with at least one of the indicated joint/UL/DL TCI state, the associated CSI-RS, and the SRS resource set configured with the associated CSI-RS.

### <Supplements>

In the first embodiment to the fifth embodiment, the spatial relation information (spatial relation info) may indicate one of the following:
- In a case of the PUCCH, PUCCH spatial relation information (for example, PUCCH-SpatialRelationInfo),
- In a case of the PUCCH, PUCCH power control set information (for example, PUCCH-PowerControlSetInfo-r17),
- In a case of the SRS, SRS spatial relation information (for example, SRS-SpatialRelationInfo), SRS-SpatialRelationInfoPos-r16, or SpatialRelationInfo-PDC-r17,
- New parameter.

Note that, in the case of the PUCCH, for a multi-TRP PUCCH (for example, a Rel-17 M-TRP PUCCH) in a first frequency range (for example, FR1), the PUCCH may not be provided with the PUCCH spatial relation information (for example, PUCCH-SpatialRelationInfo) but may be provided with the PUCCH power control set information (for example, PUCCH-PowerControlSetInfo-r17) in order to perform TRP-specific power control.

In the case of the SRS, SRS-SpatialRelationInfoPos-r16/SpatialRelationInfo-PDC-r17 may be used for positioning.

The new parameter may be associated with the PUCCH resources/SRS resources, using the same method as that for the association between the PUCCH/SRS and "PUCCH-SpatialRelationInfo"/"PUCCH-PowerControlSetInfo-r17"/"SRS-SpatialRelationInfo"/"SRS-SpatialRelationInfoPos-r16"/"SpatialRelationInfo-PDC-r17".

The PUSCH may follow the same TAG/same spatial relation information as that of the SRS resources indicated by the SRI of PUSCH transmission.

A different option/embodiment may be applied to each of "PUCCH-SpatialRelationInfo"/"SRS-SpatialRelationInfo"/"SRS-SpatialRelationInfoPos-r16"/"SpatialRelationInfo-PDC-r17"/PUSCH.

The TRP/panel/CORESET pool/CORESET group/SS set group/SRS resource set/SRS group/CSI-RS resource set/CSI-RS group/beam group/TCI group/SRI group/spatial relation group/RS group/SSB group/PL-RS group may indicate the same meaning.

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting of specific processing/operation/control/information regarding at least one of the embodiments described above,
- supporting of TA for each TRP,
- supporting of different TAs for two TRPs of the serving cell,
- supporting of different TAs for two TRPs regarding the PUSCH,
- supporting of different TAs for two TRPs regarding the PUCCH,
- supporting of different TAs for two TRPs regarding the SRS,
- maximum number of (different) TAs/TAGs supported across one or all the serving cells,
- supporting of different TAs for the M-DCI M-TRP,
- supporting of different TAs for the S-DCI M-TRP.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of a random access procedure/PRACH transmission without RAR monitoring, any RRC parameter for a specific release (for example, Rel. 18/19), or the like.

When the UE does not support at least one of the specific UE capabilities above or is not configured with the specific information, operation of Rel. 15/16 may be applied, for example.

### (Supplementary Note)

Regarding one embodiment of the present disclosure, the following supplementary notes of the invention will be given.

### {Supplementary Note 1-1}

A terminal including: a receiving section that receives serving cell configuration information; and a control section that determines timing advance to be applied to UL transmission, based on at least one of the serving cell configuration information and whether or not spatial relation information corresponding to the UL transmission is provided or a timing advance group associated with the spatial relation information.

### {Supplementary Note 1-2}

The terminal according to supplementary note 1-1, wherein when the timing advance group is associated with spatial relation corresponding to the UL transmission, the control section performs control so that information related to the timing advance group is not included in the serving cell configuration information or the timing advance group included in the serving cell configuration information is not applied to the UL transmission.

### {Supplementary Note 1-3}

The terminal according to supplementary note 1-1 or 1-2, wherein when the spatial relation information corresponding to the UL transmission is not provided, the control section determines the timing advance to be applied to the UL transmission, based on a specific timing advance group included in the serving cell configuration information.

### {Supplementary Note 1-4}

The terminal according to any one of supplementary notes 1-1 to 1-3, wherein when the spatial relation information corresponding to the UL transmission is not provided, the control section determines the timing advance to be applied to the UL transmission, based on a timing advance group associated with a sounding reference signal (SRS) resource set corresponding to the UL transmission.

### {Supplementary Note 2-1}

A terminal including: a receiving section that receives configuration information related to a sounding reference signal (SRS); and a control section that, when UL transmission is performed using an SRS resource configured by the configuration information, determines timing advance to be applied to the UL transmission, based on a timing advance group associated with an SRS resource set corresponding to the SRS resource.

### {Supplementary Note 2-2}

The terminal according to supplementary note 2-1, wherein when a plurality of SRS resource sets are configured in the configuration information, the control section determines that spatial relation of SRS resources included in a same SRS resource set is associated with a same TAG.

### {Supplementary Note 2-3}

The terminal according to supplementary note 2-1 or 2-2, wherein when an indication of a plurality of SRS resources by downlink control information is supported, the control section determines that the plurality of SRS resources or spatial relation information of the plurality of SRS resources is associated with a same timing advance group.

### {Supplementary Note 2-4}

The terminal according to any one of supplementary notes 2-1 to 2-3, wherein in the configuration information, the control section determines that spatial relation information is configured and an associated channel state information reference signal is not configured, or determines that both of the spatial relation information and the associated channel state information reference signal are configured.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

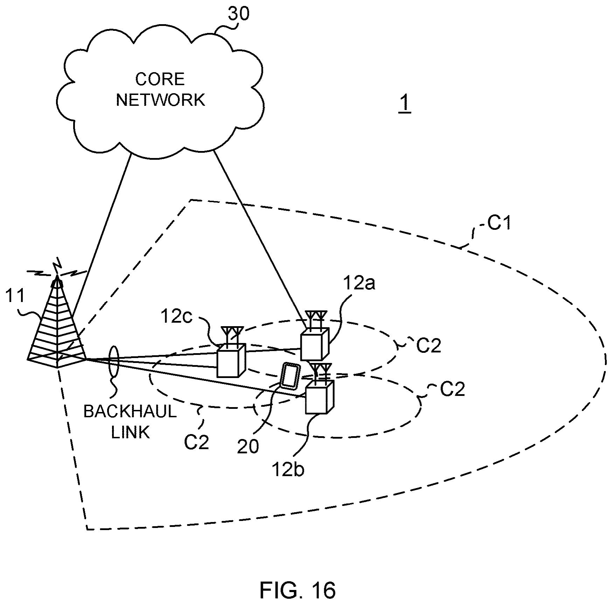

FIG. 16 is a diagram to show an example of a schematic structure of the radio communication system according to one embodiment. The radio communication system 1 (which may be simply referred to as a system 1) may be a system implementing communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs), such as a User Plane Function (UPF), an Access and Mobility management Function (AMF), a Session Management Function (SMF), Unified Data Management (UDM), an Application Function (AF), a Data Network (DN), a Location Management Function (LMF), and Operation, Administration and Maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

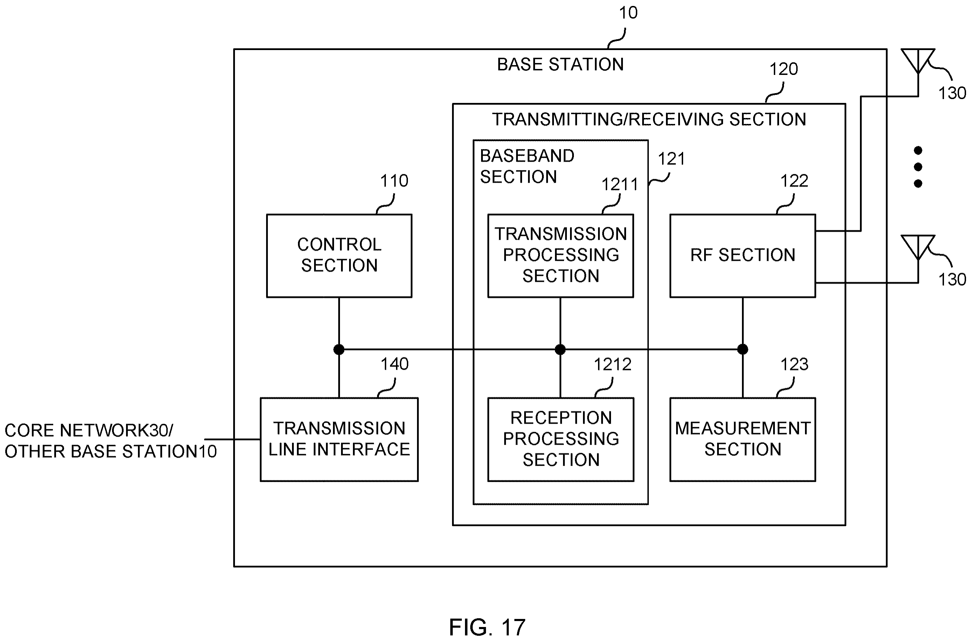

FIG. 17 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus (for example, a network node that provides NFs) included in the core network 30, other base stations 10, and so on, and, for example, acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit serving cell configuration information to a terminal. The control section 110 may control notification of timing advance to be applied to UL transmission by using at least one of the serving cell configuration information and whether or not spatial relation information corresponding to the UL transmission is provided or a timing advance group associated with the spatial relation information.

The transmitting/receiving section 120 may transmit configuration information related to a sounding reference signal (SRS) to a terminal. The control section 110 may, when the terminal performs UL transmission using an SRS resource configured by the configuration information, perform control to perform notification of information related to a timing advance group associated with an SRS resource set corresponding to the SRS resource.

### (User Terminal)

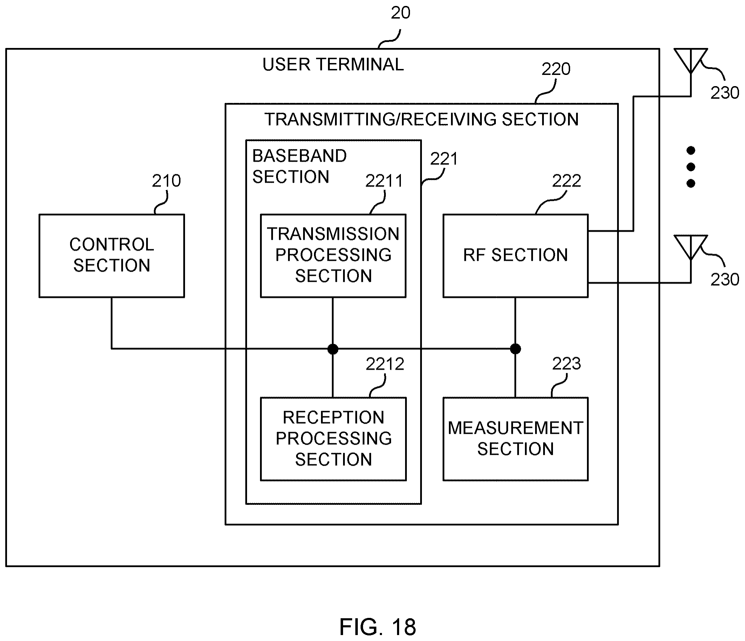

FIG. 18 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on resources for channel measurement. The resources for channel measurement may be non zero power (NZP) CSI-RS resources, for example. The measurement section 223 may derive interference measurement for CSI calculation, based on resources for interference measurement. The resources for interference measurement may be at least one of NZP CSI-RS resources for interference measurement, CSI-interference measurement (IM) resources, and the like. Note that CSI-IM may be referred to as CSI-interference management (IM), or may be interchangeably interpreted as a zero power (ZP) CSI-RS. Note that, in the present disclosure, a CSI-RS, an NZP CSI-RS, a ZP CSI-RS, CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive serving cell configuration information. The control section 210 may determine timing advance to be applied to UL transmission, based on at least one of the serving cell configuration information and whether or not spatial relation information corresponding to the UL transmission is provided or a timing advance group associated with the spatial relation information.

When the timing advance group is associated with spatial relation corresponding to the UL transmission, the control section 210 may perform control so that information related to the timing advance group is not included in the serving cell configuration information or the timing advance group included in the serving cell configuration information is not applied to the UL transmission.

When the spatial relation information corresponding to the UL transmission is not provided, the control section 210 may determine the timing advance to be applied to the UL transmission, based on a specific timing advance group included in the serving cell configuration information. When the spatial relation information corresponding to the UL transmission is not provided, the control section 210 may determine the timing advance to be applied to the UL transmission, based on the timing advance group associated with a sounding reference signal (SRS) resource set corresponding to the UL transmission.

The transmitting/receiving section 220 may receive configuration information related to a sounding reference signal (SRS). The control section 210 may, when UL transmission is performed using an SRS resource configured by the configuration information, determine timing advance to be applied to the UL transmission, based on a timing advance group associated with an SRS resource set corresponding to the SRS resource.

When a plurality of SRS resource sets are configured in the configuration information, the control section 210 may determine that spatial relation of SRS resources included in a same SRS resource set is associated with a same TAG. When downlink control information supports an indication of a plurality of SRS resources, the control section 210 may determine that the plurality of SRS resources or spatial relation information of the plurality of SRS resources is associated with a same timing advance group. In the configuration information, the control section 210 may determine that spatial relation information is configured and an associated channel state information reference signal is not configured, or determine that both of the spatial relation information and the associated channel state information reference signal are configured.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

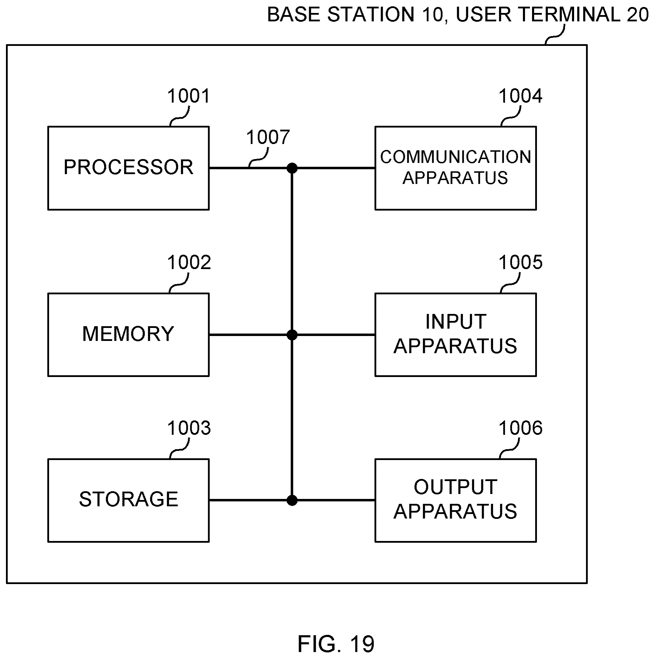

For example, a base station, a user terminal, and so on according to one embodiment of the present disclosure may function as a computer that executes the processes of the radio communication method of the present disclosure. FIG. 19 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station" a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit" "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

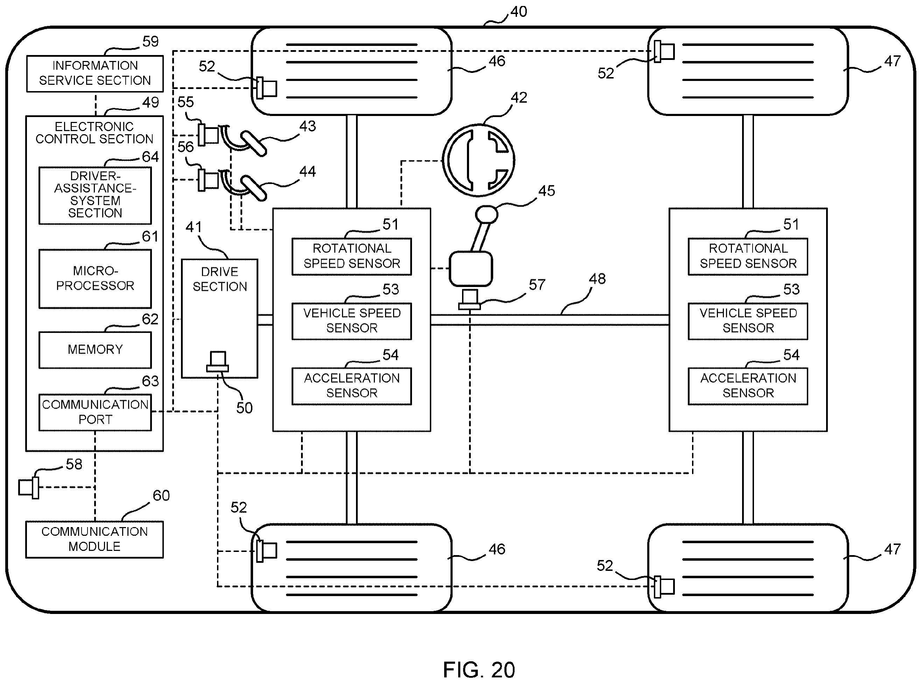

FIG. 20 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives serving cell configuration information; and
a control section that determines timing advance to be applied to UL transmission, based on at least one of the serving cell configuration information and whether or not spatial relation information corresponding to the UL transmission is provided or a timing advance group associated with the spatial relation information.

2. The terminal according to claim 1, wherein
when the timing advance group is associated with spatial relation corresponding to the UL transmission, the control section performs control so that information related to the timing advance group is not included in the serving cell configuration information or the timing advance group included in the serving cell configuration information is not applied to the UL transmission.

3. The terminal according to claim 1, wherein
when the spatial relation information corresponding to the UL transmission is not provided, the control section determines the timing advance to be applied to the UL transmission, based on a specific timing advance group included in the serving cell configuration information.

4. The terminal according to claim 1, wherein
when the spatial relation information corresponding to the UL transmission is not provided, the control section determines the timing advance to be applied to the UL transmission, based on a timing advance group associated with a sounding reference signal (SRS) resource set corresponding to the UL transmission.

5. A radio communication method for a terminal, comprising:
receiving serving cell configuration information; and
determining timing advance to be applied to UL transmission, based on at least one of the serving cell configuration information and whether or not spatial relation information corresponding to the UL transmission is provided or a timing advance group associated with the spatial relation information.

6. A base station comprising:
a transmitting section that transmits serving cell configuration information to a terminal; and
a control section that controls notification of timing advance to be applied to UL transmission by using at least one of the serving cell configuration information and whether or not spatial relation information corresponding to the UL transmission is provided or a timing advance group associated with the spatial relation information.
